Europäisches Patentamt

European Patent Office

Office européen des brevets

(11) Veröffentlichungsnummer: **0 322 471 B1**

# EUROPÄISCHE PATENTSCHRIFT

(45) Veröffentlichungstag der Patentschrift: **28.08.91**

(21) Anmeldenummer: **87119213.4**

(22) Anmeldetag: **24.12.87**

(51) Int. Cl.⁵: **G01B 11/10, B65H 63/06, D01H 13/32**

(54) **Einrichtung zum Messen eines Fadens.**

(43) Veröffentlichungstag der Anmeldung:
**05.07.89 Patentblatt 89/27**

(45) Bekanntmachung des Hinweises auf die
Patenterteilung:
**28.08.91 Patentblatt 91/35**

(84) Benannte Vertragsstaaten:
**AT BE CH DE FR GB IT LI LU NL SE**

(56) Entgegenhaltungen:
**EP-A- 0 227 861      WO-A-84/01622**
**FR-A- 1 443 425      US-A- 3 582 661**
**US-A- 3 712 743      US-A- 3 840 869**

(73) Patentinhaber: **BARCO AUTOMATION, NAAM-
LOZE VENNOOTSCHAP
Frankrijklaan 18
B-8970 Poperinge(BE)**

Patentinhaber: **W. SCHLAFHORST AG & CO.
Blumenberger Strasse 143-145
W-4050 Mönchengladbach 1(DE)**

(72) Erfinder: **De Vuyst, Marcel
Wolstraat 9
B-8790 Waregem(BE)**
Erfinder: **Goetsches, Peter
Bolksbuscher Strasse 87
W-4050 Mönchengladbach(DE)**

(74) Vertreter: **Möhrke, Dieter, Dipl.-Ing.
Blumenberger Strasse 143/145
W-4050 Mönchengladbach 1(DE)**

## Beschreibung

Die Erfindung betrifft eine Einrichtung zum Messen eines Fadens, bei der aus dem Grad der Abschattung, die der Faden oder sein Spiegelbild an einem lichtempfindlichen Element verursacht oder aus der Änderung der elektrischen Kapazität, die der sich im elektrischen Feld eines Kondensators befindende Faden an dem Kondensator hervorruft, auf mindestens eine Fadendimension geschlossen wird und bei der der Faden in einen Meßschlitz einer Meßeinrichtung einlegbar ist. Das Dokument EP-A-0 227 861 offenbart eine solche Einrichtung.

Derartige Einrichtungen werden beispielsweise an Textilmaschinen zur Fadenüberwachung eingesetzt. Dabei tritt das Problem der Verschmutzung durch Flug, Staub und Fadenteile auf.

Der Erfindung liegt die Aufgabe zugrunde, eine gattungsgemäße Einrichtung den meßwertverfälschenden Einflüssen von Verschmutzung und Verstaubung soweit wie möglich zu entziehen.

Gemäß der Erfindung wird diese Aufgabe dadurch gelöst, daß mit Abstand von einem mindestens den Meßschlitz der Meßeinrichtung enthaltenden Rahmen oder Gehäuse oberhalb und unterhalb des Meßschlitzes je ein Fadenführungselement angeordnet und durch eine Tragkonstruktion mit dem Rahmen oder Gehäuse derartig verbunden ist, daß zwischen Meßschlitz und Fadenführungselementen ein freier Durchgang für Reinigungsluft vorhanden ist.

Eine derartige Anordnung von Fadenführungselementen bringt einen Selbstreinigungszweck zustande, so daß die Anordnung weniger verschmutzt als herkömmliche Vorrichtungen.

In Weiterbildung der Erfindung ist die Tragkonstruktion des auf Abstand vom Meßschlitz gehaltenen Fadenführungselements ein Teil des die Einrichtung umschließenden oder tragenden Rahmens oder Gehäuses.

Vorteilhaft besteht die Tragkonstruktion des Fadenführungselements aus einem durch Biegestanzen, Spritzgießen oder auf dergleichen Weise aus dem Rahmen, einer Gehäusewand oder dem Deckel der Einrichtung herausgebildeten, nach außen vorspringenden Teil.

Ausführungsbeispiele der Erfindung sind in den Zeichnungen dargestellt. Anhand der Ausführungsbeispiele wird die Erfindung noch näher beschrieben und erläutert.

Fig. 1    zeigt die prinzipielle Anordnung der neuen Einrichtung.

Fig. 2    zeigt eine perspektivische Ansicht einer erfindungsgemäßen Einrichtung.

Das Gehäuse 17 einer insgesamt mit 18 bezeichneten optoelektrischen Einrichtung zum Messen eines Fadens 1 besitzt einen Meßschlitz 19, durch den mittels Fadenführungselementen 5, 6 der Faden 1 hindurchgeführt ist. Der Faden 1 läuft in Richtung des Pfeils 21.

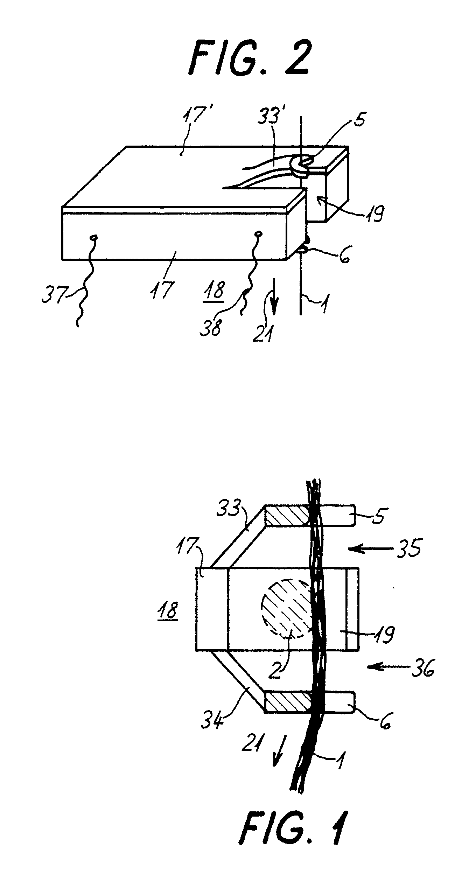

In dem Gehäuse 17 ist eine Kammer ausgebildet, in der eine Lichtquelle 2 angeordnet ist, deren Lichtstrahlen quer durch den Meßschlitz 19 gehen und dann auf nicht dagestellte Meßwertaufnehmer auftreffen. Es handelt sich bei den Meßwertaufnehmern um lichtempfindliche Elemente, von denen in Fig. 2 Anschlußleitungen 37, 38 sichtbar sind.

Bei der Ausbildung nach Fig. 1 ist mit Abstand von dem die Lichtquelle 2, den Meßschlitz 19 und die Meßwertaufnehmer enthaltenden Gehäuse 17 oberhalb und unterhalb des Meßschlitzes 19 je ein Fadenführungselement 5 beziehungsweise 6 angeordnet.

Das Fadenführungselement 5 ist durch eine Tragkonstruktion 33, das Fadenführungselement 6 durch eine Tragkonstruktion 34 mit dem Gehäuse 17 derartig verbunden, daß zwischen Meßschlitz 19 und Fadenführungselementen 5, 6 ein freier Durchgang 35 beziehungsweise 36 in einer Breite vom 4 bis 8 Millimeter für Reinigungsluft vorhanden ist. Die Reinigungsluft entstammt beispielsweise dem laufenden Faden 1, der bei höheren Laufgeschwindigkeiten einen für Reinigungszwecke ausreichenden Luftzug und Luftwirbelungen verursachen kann. Die Reinigungsluft kann aber auch aus der Umgebung beziehungsweise aus besonderen Reinigungseinrichtungen von Fall zu Fall oder kontinuierlich zugeführt werden, was jedoch zusätzlichen Aufwand verursacht.

Bei der Ausbildung nach Fig. 2 ist die Tragkonstruktion 33' des auf Abstand vom Meßschlitz 19 gehaltenen Fadenführungselements 5 ein Teil des die Einrichtung 18 umschließenden Gehäuses 17, genauer gesagt eines Gehäusedeckels 17'.

Die Tragkonstruktion 33' des Fadenführungselements 5 besteht aus einem durch Biegestanzen aus dem Deckel 17' herausgebildeten, nach außen vorspringenden Teil.

Teil 33' ist an seinem Ende gegabelt, so daß es das aus einem gekerbten Plättchen aus Sinterkeramik bestehende Fadenführungselement 5 von zwei Seiten her umschließen und halten kann.

## Patentansprüche

1.    Einrichtung zum Messen eines Fadens, bei der aus dem Grad der Abschattung, die der Faden (1) oder sein Spiegelbild an einem lichtempfindlichen Element verursacht, oder aus der Änderung der elektrischen Kapazität, die der sich im elektrischen Feld eines Kondensators befindende Faden an dem Kondensator hervorruft, auf mindestens eine Fadendimension geschlossen wird und bei der der Faden in einen Meßschlitz (19) einer Meßeinrichtung (18) einlegbar ist,

**dadurch gekennzeichnet**,

daß mit Abstand von einem mindestens den Meßschlitz (19) der Meßeinrichtung (18) enthaltenden Rahmen oder Gehäuse (17) oberhalb und unterhalb des Meßschlitzes (19) je ein Fadenführungselement (5, 6) angeordnet und durch eine Tragkonstruktion (33, 34) mit dem Rahmen oder Gehäuse (17) derartig verbunden ist, daß zwischen Meßschlitz (19) und Fadenführungselement (5, 6) ein freier Durchgang (35, 36) für Reinigungsluft vorhanden ist.

2. Einrichtung nach Anspruch 1, dadurch gekennzeichnet, daß die Tragkonstruktion (33') des auf Abstand vom Meßschlitz (19) gehaltenen Fadenführungselements (5) ein Teil des die Einrichtung (18) umschließenden oder tragenden Rahmens oder Gehäuses (17) ist.

3. Einrichtung nach Anspruch 1 oder 2, dadurch gekennzeichnet, daß die Tragkonstruktion (33') des Fadenführungselements (5) aus einem durch Biegestanzen, Spritzgießen oder auf dergleichen Weise aus dem Rahmen, einer Gehäusewand oder dem Deckel (17) der Einrichtung (18) herausgebildeten, nach außen vorspringenden Teil besteht.

**Claims**

1. A device for measuring a thread wherein, from the degree of shading which the thread (1) or its mirror image causes on a light-sensitive element, or from the alteration of electric capacitance which the thread situated in the electric field of a capacitor produces on the capacitor, a conclusion is drawn as to at least one thread dimension, and wherein the thread can be placed into a measuring slit (19) of a measuring device (18), characterized in that at a distance from a frame or housing (17) containing at least the measuring slit (19) of the measuring device (18) one thread guide element (5, 6) is mounted respectively above and below the measuring slit (19) and is connected by a supporting construction (33, 34) with the frame or housing (17) in such a manner that a free passage (35, 36) for cleaning air is provided between measuring slit (19) and thread guide element (5, 6).

2. A device according to claim 1, characterized in that the supporting construction (33') of the thread guide element (5) held at a distance from the measuring slit (19) forms part of the frame or housing (17) surrounding or supporting the device (18).

3. A device according to either claim 1 or 2, characterized in that the supporting construction (33') of the thread guide element (5) consists of an externally projecting part formed by combined cutting and bending, injection moulding or like process, from the frame, a housing wall or the cover (17) of the measuring device (18).

**Revendications**

1. Dispositif pour mesurer un fil, dans lequel des déductions sont tirées, quant à au moins une dimension du fil, sur la base du degré d'obscurcissement que le fil (1) ou son image spéculaire provoque sur un élément photosensible, ou bien sur la base de la variation de la capacité électrique que le fil, situé dans le champ électrique d'un condensateur, engendre sur ce condensateur, et dans lequel le fil peut être inséré dans une fente de mesurage (19) d'un appareil mesureur (18), caractérisé par le fait qu'un élément respectif (5, 6) de guidage du fil est disposé au-dessus et au-dessous de la fente de mesurage (19), à distance d'un cadre ou boîtier (17) englobant au moins la fente de mesurage (19) de l'appareil mesureur (18), ledit élément étant relié au cadre ou boîtier (17), par l'intermédiaire d'une structure de support (33, 34), de telle sorte qu'un libre passage (35, 36) soit présent, pour de l'air de nettoyage, entre la fente de mesurage (19) et l'élément (5, 6) de guidage du fil

2. Dispositif selon la revendication 1, caractérisé par le fait que la structure de support (33') de l'élément (5) de guidage du fil, maintenu à distance de la fente de mesurage (19), constitue une partie du cadre ou boîtier (17) qui entoure ou supporte l'appareil (18).

3. Dispositif selon la revendication 1 ou 2, caractérisé par le fait que la structure de support (33') de l'élément (5) de guidage du fil est constituée d'une pièce saillant vers l'extérieur et ménagée par pliage et découpage combinés, par moulage par injection ou d'une manière analogue, à partir du cadre, d'une paroi du boîtier ou du couvercle (17) dé l'appareil (18).

## FIG. 2

## FIG. 1